Europäisches Patentamt

European Patent Office

Office européen des brevets

(19)

(11) Veröffentlichungsnummer: **0 448 793 A1**

## (12) EUROPÄISCHE PATENTANMELDUNG

(21) Anmeldenummer: 90123419.5

(22) Anmeldetag: 06.12.90

(51) Int. Cl.5: **C08K 5/01**, C09D 11/02

(30) Priorität: 30.03.90 DE 4010319

(43) Veröffentlichungstag der Anmeldung:
02.10.91 Patentblatt 91/40

(84) Benannte Vertragsstaaten:
AT BE CH DE DK ES FR GB GR IT LI LU NL SE

(71) Anmelder: **RÜTGERSWERKE
AKTIENGESELLSCHAFT**
**Mainzer Landstrasse 217**
**W-6000 Frankfurt am Main 1(DE)**

(72) Erfinder: **Zick, Hans-Jürgen**
**Hochdahlerstrasse 16**
**W-4000 Düsseldorf 12 (Gerresheim)(DE)**
Erfinder: **Volkmann, Norbert**
**Am Vorstgraben 54**
**W-4173 Kerken 2(DE)**

(54) Kohlenwasserstoffmischungen, Verfahren zu ihrer Herstellung und ihre Verwendung.

(57) Erfindungsgemäße flüssige Kohlenwasserstoffmischungen enthalten 30 bis 90 Gew.-% einer Mineralölfraktion mit einem Siedebereich von 200 bis 450 °C und 70 - 10 Gew.-% eines oder mehrerer aromatischer Polymere.

EP 0 448 793 A1

Die Erfindung betrifft flüssige, aromatische, polycyclenfreie Kohlenwasserstoffmischungen.

Schwerölfraktionen aus dem Rückstand der fraktionierten Destillation von Rohöl finden u. a. Verwendung als preiswerte aber technisch hochwertige Bestandteile von Druckfarben in der Druckfarbenindustrie sowie als Weichmacher bei der Gummi- und Kautschukverarbeitung.

Leider enthalten diese Fraktionen große Anteile (bis zu 40 %) an polycyclischen Kohlenwasserstoffen, von denen einige cancerogen oder zumindest cocancerogen sind.

Versuche diese Fraktion durch andere Kohlenwasserstoffe zu ersetzen, scheiterten daran, daß die Ersatzöle sowohl in der Druckfarbenindustrie als auch bei der Gummiindustrie technische Nachteile aufweisen. So sind z. B. Öle mit im wesentlichen paraffinisch-naphthenischen Aufbau mit den meisten Synthesekautschuken nicht voll verträglich. Ähnliches gilt auch für die Druckfarbenindustrie.

Es ist daher Aufgabe der Erfindung, flüssige Kohlenwasserstoffmischungen bereitzustellen, die mit den in der Gummi-, Kautschuk- und Druckindustrie eingesetzten Polymeren verträglich sind und mit diesen Polymeren hochwertige Produkte ergeben, die aber im wesentlichen frei sind von polycyclischen Verbindungen.

Die Lösung der Aufgabe erfolgt durch Kohlenwasserstoffmischungen gemäß der Ansprüche 1 bis 4. Sie werden gemäß Anspruch 5 hergestellt durch Vermischen der Einzelkomponenten miteinander bei Temperaturen im Bereich von Raumtemperatur bis 100 °C. Gemäß der Ansprüche 6 und 7 finden die erfindungsgemäßen Kohlenwasserstoffmischungen Anwendung in Druckfarben und Gummi- und Kautschukmischungen.

Es wurde gefunden, daß sich Gemische, die hochsiedende Mineralölfraktionen und aromatische Polymere im Mischungsverhältnis von 30 bis 90 zu 70 - 10 Gew.-% enthalten, für die genannten Anwendungen hervorragend eignen. Sie können in der richtigen Viskosität nahezu beliebig eingestellt werden, sind trotz großer Anteile an aliphatischen Verbindungen überraschenderweise mit den zu kombinierenden Polymeren verträglich, haben einen extrem niedrigen Dampfdruck und sind im wesentlichen frei von polycyclischen Aromaten.

Als Mineralöl wird erfindungsgemäß ein Destillationsschnitt im Siedebereich von etwa 200 °C bis 450 °C, bevorzugt von etwa 200 bis 300 °C, der in der Regel einen Aromatengehalt von bis 30 %, eine Dichte bei 20 °C von etwa 0,8 g/m$^3$ bis 1,2 g/m$^3$ und einen Flammpunkt von über 60 °C aufweist. Der Aromatengehalt besteht nahezu ausschließlich aus nicht polycyclischen Aromaten, meist alkylierten aromatischen Kohlenwasserstoffen oder aromatischen Heterocyclen.

Einsetzbare aromatische Polymere sind alle Polymerisate von ungesättigten Verbindungen mit einem aromatischen oder quasiaromatischen Grundkörper wie Inden-, Dicyclopentadien-, Vinyltoluol-, Methylinden-, aromatische Kohlenwasserstoff-, α-Methylstyrol- und Styrolharze oder Harzrückstände aus Crack- oder Synthesereaktionen wie z. B. Rückstände aus Visbreakern oder Ethylencrackern, aus der Synthese von Styrol, Phenol, Ethylbenzol oder Dimethylterephthalat.

Diese Polymere haben Erweichungspunkte im Bereich von 30 bis 120 °C, bevorzugt im Bereich von 60 bis 90 °C und sind im wesentlichen frei von polycyclischen, aromatischen Verbindungen.

Zur Herstellung der erfindungsgemäßen Kohlenwasserstoffmischungen werden die beiden Komponenten und evtl. weitere Zusatzstoffe, bevorzugt in flüssigem Zustand miteinander vermischt. Das Mischungsverhältnis wird je nach gewünschtem Aromatengehalt und gewünschter Viskosität im Bereich zwischen 30 bis 90 Gew.-% Mineralölfraktion und 70 - 10 Gew.-% aromatisches Polymer oder Polymerengemische gewählt. Der Aromatengehalt der Kohlenwasserstoff-Mischung liegt im allgemeinen im Bereich von 25 bis 40 %.

Der Gehalt an polycyclischen Aromaten bei diesen Mischungen liegt normalerweise unter 50 ppm.

Die erfindungsgemäßen Kohlenwasserstoffmischungen werden vorzugsweise als Modifizierungsmittel für Druckfarben oder als Weichmacher für natürliche und synthetische Kautschuke eingesetzt.

**Patentansprüche**

1. Flüssige Kohlenwasserstoffmischung, **dadurch gekennzeichnet**, daß sie 30 bis 90 Gew.-% einer Mineralölfraktion mit einem Siedebereich von 200 bis 450 °C und 70 - 10 Gew.-% eines oder mehrerer aromatischer Polymere enthält.

2. Kohlenwasserstoffmischung nach Anspruch 1, **dadurch gekennzeichnet**, daß es eine Mineralölfraktion mit einem Siedebereich von 300 bis 400 °C enthält.

3. Kohlenwasserstoffmischung nach den Ansprüchen 1 und 2, **dadurch gekennzeichnet**, daß es als aromatisches Polymer ein Styrol- oder α-Methylstyrolharz enthält.

4. Kohlenwasserstoffmischung nach den Ansprüchen 1 und 2, **dadurch gekennzeichnet**, daß es als aromatisches Polymer ein aromatisches Kohlenwasserstoffharz enthält.

5. Verfahren zur Herstellung der Kohlenwasserstoffmischungen gemäß der Ansprüche 1 bis 4, **dadurch gekennzeichnet**, daß die eine Mineralölfraktion mit einem Siedebereich von 200 bis 450 °C und ein aromatisches Polymer oder Polymerengemisch und ggf. weitere Zusatzstoffe, bevorzugt in flüssigem Zustand, miteinander vermischt werden.

6. Verwendung der Kohlenwasserstoffmischung nach den Ansprüchen 1 bis 4 als Weichmacher für natürliche oder synthetische Kautschuke.

7. Verwendung der Kohlenwasserstoffmischung nach den Ansprüchen 1 bis 4 als Modifizierungsmittel für Druckfarben.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| X | EP-A-0 359 935 (VERKAUFSGESELLSCHAFT FÜR TEER-ERZEUGNISSE MBH) <br> * das ganze Dokument * <br> — — — | 1-5 | C 08 K 5/01 <br> C 09 D 11/02 |
| A | FR-A-2 070 026 (ESSO RESEARCH AND ENGINEERING CO.) <br> * Ansprüche * <br> — — — | 1 | |
| A | US-A-4 327 011 (ROBERT H. RIPLEY ET AL.) <br> * Ansprüche * <br> — — — | 1 | |
| A | FR-A-2 378 082 (SOCIETE FRANCAISE DES PETROLES BP) <br> — — — — — | | |

| | RECHERCHIERTE SACHGEBIETE (Int. Cl.5) |
| --- | --- |
| | C 08 K <br> C 08 L <br> C 09 D |

Der vorliegende Recherchenbericht wurde für alle Patentansprüche erstellt

| Recherchenort | Abschlußdatum der Recherche | Prüfer |
| --- | --- | --- |
| Den Haag | 09 Juli 91 | DE LOS ARCOS Y VELAZ |